# EUROPÄISCHE PATENTANMELDUNG

(11) **EP 2 290 327 A1**
(43) Veröffentlichungstag der Anmeldung: **02.03.2011**
(21) Anmeldenummer: 10173406.9
(22) Anmeldetag: 19.08.2010
(51) Int. Cl.: G01C 21/36, G10L 15/22

(54) **Verfahren zum Betrieb eines Navigationssystems**

(30) Priorität: 27.08.2009 DE 102009038774; 13.08.2010 DE 102010034357
(71) Anmelder: Navigon AG, 20251 Hamburg (DE)
(72) Erfinder: Fritsche, Jan-Georg, 97078, Würzburg (DE); Steglich, Martin, 97080, Würzburg (DE)
(74) Vertreter: von den Steinen, Axel

(57) **Zusammenfassung**

Die Erfindung betrifft ein Verfahren zum Betrieb eines Navigationssystems umfassend zumindest eine Aufnahmeeinrichtung, ein Spracherkennungsmodul, zumindest eine Ausgabeeinrichtung und eine Kontaktdatenbank (14), in der Kontaktdatensätze (15, 16, 17) gespeichert sind, die während der Laufzeit des Navigationssystems erstellt werden, und die jeweils zumindest einen Kontaktdatenbestandteil (21), insbesondere zumindest einen Namensbestandteil (18), umfassen, wobei zumindest ein Teil der Kontaktdatenbestandteile derart gespeichert ist, dass ein Vergleich mit dem Ergebnis einer Spracherkennungsanalyse erfolgen kann, mit den folgenden Verfahrensschritten:
a) Aufnahme einer akustischen Eingabe bestehend aus zumindest einem Eingabebestandteil mittels der Aufnahmeeinrichtung;
b) Analyse der akustischen Eingabe mittels Spracherkennungsmodul;
c) Vergleich des Ergebnisses der Spracherkennungsanalyse mit zumindest einem Teil der Kontaktdatenbestandteile, wobei der Vergleich zu einer Zuordnung eines Eingabebestandteils zu zumindest einem Kontaktdatenbestandteil führen kann; d) Auswahl zumindest eines Kontaktdatensatzes (15, 16, 17) zur Weiterverarbeitung, wobei ein ausgewählter Kontaktdatensatz (15, 16, 17) zumindest einen Kontaktdatenbestandteil umfasst, der einem Eingabebestandteil zugeordnet ist.

## Beschreibung

Die Erfindung betrifft ein Verfahren zum Betrieb eines Navigationssystems nach dem Oberbegriff des Anspruchs 1.

Bekannte Navigationssysteme sind mit Spracherkennungssoftware ausgestattet, um dem Benutzer zu ermöglichen, bestimmte Eingaben, insbesondere die Eingabe von Adressen, auf akustische Weise vorzunehmen. Dies bedeutet mit anderen Worten, dass bei diesen Navigationssystemen mit Spracherkennungssystem Adressen, wie beispielsweise die Adresse eines Zielpunktes einer zu berechnenden Route, nicht mehr an einer Tastatur oder einem Touch-Screen alphanumerisch eingegeben werden müssen, sondern dass die verschiedenen Eingabebestandteile der Adresse in eine Aufnahmeeinrichtung, insbesondere ein Mikrophon, eingesprochen werden. Durch Sprachanalyse mittels eines Spracherkennungsmoduls können die akustischen Eingaben analysiert und beispielsweise einem geographischen Ort, der durch eine Adresse mit entsprechenden Adressbestandteilen definiert ist, zugeordnet werden. Bei bekannten Navigationssystemen erfolgt die Zuordnung einer akustischen Eingabe, zu beispielsweise einem Ziel bzw. zu einer Adresse, mittels Phonemen, die durch den Erzeuger einer Datenbank, insbesondere einer digitalen Karte, mit dem jeweiligen Ziel bzw. der jeweiligen Adresse verknüpft sind.

Nachteilig an diesen bekannten Verfahren der Spracheingabe ist, dass bei einer Spracheingabe die von vornherein mit einem Element der Datenbank verknüpften Phoneme zur Identifizierung des Elements verwendet werden müssen. Um eine korrekte Spracheingabe durchführen zu können, ist es bei bekannten Navigationssystemen deswegen für den Benutzer zwingend erforderlich, die jeweils mit einem Element der entsprechenden Datenbank verknüpften, vordefinierten Phoneme zu kennen. Bei vielen Eingaben, wie beispielsweise einer Zieleingabe, ist der Benutzer aber eben nicht in der Lage, die vordefinierten Phoneme akustisch einzugeben, da ihm beispielsweise die Adresse des Ziels nicht eindeutig im Gedächtnis ist. Der Benutzer mag zwar über gewisse Informationen bezüglich seines Ziels verfügen, beispielsweise wer an diesem Ziel lebt oder arbeitet, diese können jedoch vom Navigationssystem nicht mit dem entsprechenden Ziel verknüpft werden und deshalb nicht zur Eingabe genutzt werden. Somit kann eine akustische Eingabe, wie beispielsweise eine Zieleingabe anhand der dem Benutzer zum Zeitpunkt der Eingabe geläufigen Informationen, nicht erfolgen.

Ausgehend von diesem Stand der Technik ist es Aufgabe der vorliegenden Erfindung, ein neues Verfahren zum Betrieb eines Navigationssystems vorzuschlagen, welches eine intuitive akustische Eingabe ermöglicht.

Diese Aufgabe wird durch ein Verfahren der Lehre des Anspruchs 1 gelöst.

Vorteilhafte Ausführungsformen der Erfindung sind Gegenstand der Unteransprüche.

Das erfindungsgemäße Verfahren beruht auf dem Grundgedanken, dass ein Element einer Datenbank, insbesondere ein Zielpunkt oder eine Adresse, mit einer Vielzahl von Informationen verknüpft werden kann, wobei die Informationen frei definierbar sind und zur Identifikation des Elements bei einer akustischen Eingabe berücksichtigt werden. Dazu umfasst das Navigationssystem eine Kontaktdatenbank, in der eine Vielzahl von Kontaktdatensätzen elektronisch gespeichert ist, die wiederum jeweils zumindest einen Kontaktdatenbestandteil, insbesondere zumindest einen Namensbestandteil, umfassen, wobei die Kontaktdatenbestandteile während der Laufzeit des Navigationssystems erstellt werden und zumindest ein Teil der Kontaktdatenbestandteile derart gespeichert ist, dass ein Vergleich mit dem Ergebnis einer Spracherkennungsanalyse erfolgen kann. Dabei kann ein Kontaktdatensatz mit mehr als einem Element einer oder verschiedener Datenbanken verknüpft sein. Beispielsweise kann ein Kontaktdatensatz neben einer Verknüpfung mit zumindest einem geographischen Punkt auch eine Verknüpfung mit zumindest einem Element einer Telefonnummerndatenbank aufweisen.

Die Kontaktdatenbestandteile, die ein Kontaktdatensatz umfassen kann, sind grundsätzlich beliebig. Als Kontaktdatenbestandteil eignet sich generell alles, was einem Kontakt an Informationen und/oder Details zugewiesen werden kann. Besonders geläufige Kontaktdatenbestandteile sind Namensbestandteile. Dabei ist die Bedeutung eines Namensbestandteils im Bezug auf das erfindungsgemäße Verfahren keineswegs auf Personennamen beschränkt. Wenn es sich beispielsweise bei dem Kontakt eines Kontaktdatensatzes um eine Firma oder ein Unternehmen handelt, kann auch der Firmenname bzw. Unternehmensname als Namensbestandteil und damit als Teil der Kontaktdatenbestandteile des Kontaktdatensatzes gespeichert sein.

Vorteilhaft für das erfindungsgemäße Verfahren ist es außerdem, wenn ein Kontaktdatensatz beispielsweise eine private und/oder eine geschäftliche Adresse, eine private und/oder eine geschäftliche Telefonnummer sowie eine private und/oder geschäftliche E-Mail-Adresse umfasst. Zusätzlich kann für einen Kontaktdatensatz, der sich auf eine Person bezieht, auch noch der Name einer Firma bzw. eines Unternehmens, bei dem die Kontaktperson beschäftigt ist, und die Gesellschaftsform des Unternehmens als Kontaktdatenbestandteil in einem Kontaktdatensatz enthalten sein.

In welcher Form eine derartige Kontaktdatenbank gespeichert wird, ist grundsätzlich beliebig. Es ist jedoch vorteilhaft, wenn die zusätzlich zu den Namensbestandteilen vorhandenen Kontaktdatenbestandteile zusammen mit den Namensbestandteilen abgespeichert werden. Alternativ dazu kann eine vorteilhafte Speicherung der Kontaktdatenbank dadurch erfolgen, dass die zusätzlich zu den Namensbestandteilen vorhandenen Kontaktdatenbestandteile in einer separaten Datenstruktur gespeichert werden, auf die in der Datenstruktur der Namensbestandteile verwiesen wird.

Das erfindungsgemäße Verfahren sieht vor, dass zunächst eine akustische Eingabe aufgenommen wird, die aus zumindest einem Eingabebestandteil besteht. Die Aufnahme erfolgt dabei über eine Aufnahmeeinrichtung, wie beispielsweise ein Mikrophon. Einer Eingabe, die aus mehreren Wörtern besteht, wird dabei bevorzugt ein Eingabebestandteil für jedes Wort der Eingabe zugeordnet. Eine Eingabe aus mehreren Eingabebestandteilen ist im vorgeschlagenen Verfahren ohne Interaktionsvorgänge, insbesondere ohne Unterbrechung der Eingabe, für Bestätigungseingaben und/oder Aufforderungsausgaben seitens des Navigationssystems möglich.

Im nächsten Verfahrensschritt wird die akustische Eingabe einer Spracherkennungsanalyse unterzogen. Die Analyse der aufgenommenen akustischen Eingabe erfolgt dabei mittels eines Spracherkennungsmoduls. In diesem Verfahrensschritt wird also das akustische Signal, welches an der Aufnahmeeinrichtung aufgenommen wird, derart weiterverarbeitet, dass der Inhalt der Spracheingabe in ein elektronisch verarbeitbares und vergleichbares Format übertragen wird.

Ein weiterer Verfahrensschritt sieht vor, dass das Ergebnis der Spracherkennungsanalyse dann zumindest mit einem Teil der Kontaktdatenbestandteile verglichen wird. Dabei wird der Teil der Kontaktdatenbestandteile auf mögliche Übereinstimmung mit den Eingabebestandteilen bzw. dem Ergebnis der Spracherkennungsanalyse überprüft. Kontaktdatenbestandteile, die ein gewisses Maß an Übereinstimmung mit dem Ergebnis der Spracherkennungsanalyse eines Eingabebestandteils aufweisen, werden dabei als Ergebnis des Vergleichsvorgangs als mögliche Äquivalente zu den jeweiligen Eingabebestandteilen eingestuft. Mit anderen Worten ausgedrückt bedeutet dies, dass Kontaktdatenbestandteile, in Abhängigkeit vom Ergebnis der Spracherkennungsanalyse, indirekt Eingabebestandteilen zugeordnet werden können.

Im darauffolgenden Verfahrensschritt des erfindungsgemäßen Verfahrens wird, aufgrund des Vergleichs der Kontaktdatenbestandteile mit dem Ergebnis der Spracherkennungsanalyse, zumindest ein Kontaktdatensatz aus der Kontaktdatenbank zur Weiterverarbeitung ausgewählt, wobei der ausgewählte Kontaktdatensatz zumindest einen, als mögliches Äquivalent eines Eingabebestandteils eingestuften Kontaktdatenbestandteil enthält.

Damit ermöglicht das beschriebene Verfahren, dass ein Kontaktdatensatz der Kontaktdatenbank anhand von allen, zum Vergleich mit dem Ergebnis einer Spracherkennung geeignet gespeicherten Kontaktdatenbestandteilen durch eine akustische Eingabe ermittelt werden kann. Dabei ist für das vorgeschlagene Verfahren unerheblich, ob die akustische Eingabe, eine korrekte Spracherkennung vorausgesetzt, einen oder mehrere Kontaktdatenbestandteile eines Kontaktdatensatzes benennt.

Die Art der Eingabe von Kontaktdatenbestandteilen eines Kontaktdatensatzes zur Speicherung in der Kontaktdatenbank ist grundsätzlich beliebig. Vorteilhaft ist jedoch, wenn Kontaktdatenbestandteile manuell an einer Eingabeeinrichtung des Navigationssystems eingegeben werden können. Durch die Eingabe von Kontaktbestandteilen an einer Eingabeeinrichtung, wie beispielsweise an einem Touch-Screen, wird der Benutzer in die Lage versetzt, einen Kontaktdatensatz durch manuelle Eingabe der Kontaktdatenbestandteile in die Kontaktdatenbank aufzunehmen, unabhängig davon, in welcher Form die Kontaktdatenbestandteile des Kontaktdatensatzes dem Benutzer vorliegen. Beispielsweise kann der Benutzer beim Vorliegen einer Visitenkarte die Kontaktdatenbestandteile des Kontaktes besonders einfach manuell an einer Eingabeeinrichtung des Navigationssystems eingeben. Auch wenn die Kontaktdatenbestandteile eines Kontaktdatensatzes fernmündlich, insbesondere an einem (Mobil-) Telefon, übermittelt werden, ist eine manuelle Eingabe vorteilhaft. Der Benutzer kann die manuelle Eingabe bereits während der fernmündlichen Übermittlung der Kontaktdatenbestandteile vornehmen, ohne dass diese in jedweder Form aufgeschrieben oder zwischengespeichert werden müssen.

Alternativ oder additiv zur manuellen Eingabe von Kontaktdatenbestandteilen an einer Eingabeeinrichtung des Navigationssystems ist es besonders vorteilhaft, wenn Kontaktdatenbestandteile zur Speicherung in der Kontaktdatenbank elektronisch an das Navigationssystem übertragen werden. Dies ist grundsätzlich immer dann möglich, wenn die Vorrichtung, von der die Kontaktdatenbestandteile gesendet werden, selbst eine elektronisch gespeicherte Kontaktdatenbank umfasst oder zum Empfang oder Senden von Kontaktdatenbestandteilen eingerichtet ist. Insbesondere ist für die Übertragung von Kontaktdatenbestandteilen eine Synchronisation mit Mobiltelefonen, Computern und/oder einem Personal Digital Assistance (PDA) vorgesehen. Synchronisationsstandards sind für ein breites Spektrum von Vorrichtungen, die über eine elektronisch gespeicherte Kontaktdatenbank verfügen, hinlänglich bekannt. In welcher Weise die Übertragung der Kontaktdatenbestandteile erfolgt, ist grundsätzlich beliebig. Beispielsweise können Kontaktdaten durch eine physische Verbindung in der Form eines Übertragungs- bzw. Synchronisations-Datenkabels übertragen werden. Alternativ dazu ist ebenfalls eine kabellose Übertragung mittels bekannter Funk- bzw. Radiostandards, wie beispielsweise WiFi, Bluetooth oder dergleichen, möglich. Auch kann ein Navigationssystem, welches mit dem erfindungsgemäßen Verfahren betrieben wird, selbst auf einem Mobiltelefon zur Ausführung kommen. In diesem Fall ist es vorteilhaft, wenn das Navigationssystem auf die Kontaktdatensätze von zumindest einer im Mobiltelefon gespeicherten Kontaktdatenbank zugreifen und zur Durchführung des erfindungsgemäßen Verfahrens aufbereiten und oder verwenden kann.

Da heutzutage eine Vielzahl von Vorrichtungen für den Empfang, die Speicherung, die Weiterverarbeitung und nicht zuletzt die Übertragung von Kontaktdatensätzen bzw. ganzen Kontaktdatenbanken eingerichtet ist, ist es besonders vorteilhaft für das erfindungsgemäße Verfahren, wenn die Kontaktdatenbanken, die einem Benutzer in verschiedenen Vorrichtungen zur Verfügung stehen, einfach auf ein Navigationssystem übertragen werden können, welches mit dem erfindungsgemäßen Verfahren betrieben wird. Dadurch wird die Erstellung einer komplexen und umfangreichen Kontaktdatenbank erleichtert, was wiederum eine flexible und intuitive akustische Eingabe ermöglicht.

Eine weitere vorteilhafte Ausführungsform des erfindungsgemäßen Verfahrens besteht darin, dass in einem Kontaktdatensatz Synonyme zu einzelnen Kontaktdatenbestandteilen als zusätzlicher Kontaktdatenbestandteil gespeichert werden, die beim Vergleich des Ergebnisses der Spracherkennungsanalyse berücksichtigt werden. Dies hat den Vorteil, dass mit der Anzahl der Kontaktdatenbestandteile eines Kontaktdatensatzes auch die Möglichkeiten zum Vergleich mit dem Ergebnis der Spracherkennung zunehmen. Dadurch wird die Erkennung des gewünschten Kontaktdatensatzes verbessert.

Die Speicherung von Synonymen ist aber auch deshalb besonders vorteilhaft, weil die Synonyme dem alltäglichen Sprachgebrauch mitunter näher sind als die originären Kontaktbestandteile eines Kontaktdatensatzes. So ist es beispielsweise bei geschäftlichen Kontakten durchaus üblich, die Person mit "Herr" oder "Frau" gefolgt vom Nachnamen der Person anzusprechen. Daher ist davon auszugehen, dass ein Benutzer eine derartige Eingabe bevorzugt vornehmen wird, nicht zuletzt da ihm der Vorname des Kontaktes nicht geläufig ist. Daher ist es vorteilhaft, wenn als Synonym zu einem Kontaktdatenbestandteil, der den Vornamen eines Kontaktdatensatzes umfasst, jeweils das Synonym "Herr" oder "Frau" als eigener Kontaktdatenbestandteil in den Kontaktdatensatz aufgenommen wird. Die Erstellung und Speicherung von Synonymen kann dabei automatisch und/oder durch Interaktion des Benutzers erfolgen. Im Beispiel der Zuweisung von "Herr" bzw. "Frau" zu einem Kontaktdatenbestandteil eines Vornamens kann beispielsweise anhand einer Analyse der Endung des Vornamens auf das Geschlecht und somit auf das Synonym geschlossen werden. Vor der Speicherung eines automatisch ermittelten Synonyms als Kontaktdatenbestandteil kann beispielsweise durch eine Ausgabe, mittels einer Ausgabeeinrichtung des Navigationssystems, eine Bestätigung des ermittelten Synonyms abgefragt werden.

Auch bei Kontaktdatenbestandteilen, die in geschriebener Form bevorzugt in einer abgekürzten Schreibweise verwendet werden, ist es besonders sinnvoll, wenn die ausformulierte Schreibweise solcher Abkürzungsformen als Synonyme zu dem jeweiligen Kontaktdatenbestandteil als selbstständiger Kontaktdatenbestandteil im Kontaktdatensatz abgespeichert wird. Als Beispiel für derartige Abkürzungen seien hier akademische Titel, wie beispielsweise "Professor" oder "Doktor" genannt, die in geschriebener Form oftmals als "Prof." bzw. "Dr." abgekürzt werden. Liegt jedoch nur eine derartige Abkürzung als Kontaktdatenbestandteil vor, so kann dies den Vergleich der Kontaktdatenbestandteile mit dem Ergebnis der Spracherkennungsanalyse deutlich erschweren, weil der Benutzer bei der akustischen Eingabe normalerweise die ausformulierte Schreibweise der Abkürzungsform in die Eingabeeinrichtung einsprechen wird.

Sind jedoch auch die ausgeschriebenen Abkürzungen als Kontaktdatenbestandteil in der Kontaktdatenbank hinterlegt, wird die gebräuchliche Aussprache in einer akustischen Eingabe beim Vergleich des Ergebnisses der Spracherkennungsanalyse mit den Kontaktdatenbestandteilen erkannt. Daher ist es ebenfalls besonders vorteilhaft, wenn die Synonyme von Kontaktdatenbestandteilen beim Vergleich mit einem Ergebnis einer Spracherkennungsanalyse einer akustischen Eingabe berücksichtigt werden. Dadurch wird in nicht unerheblichem Maße die Flexibilität bei der akustischen Eingabe gesteigert. Dadurch wird letztendlich auch die Identifizierungsrate einer akustischen Eingabe gesteigert.

In welcher Art und Weise der Vergleich zwischen dem Ergebnis der Spracherkennungsanalyse und den Kontaktbestandteilen der Kontaktdatenbank erfolgt, ist grundsätzlich beliebig. Es ist jedoch besonders vorteilhaft, wenn den Kontaktdatenbestandteilen Sprachäquivalente, insbesondere Phoneme, zugeordnet sind, die zum Vergleich mit dem Ergebnis der Spracherkennungsanalyse herangezogen werden. Dies vereinfacht den Vergleich mit dem Ergebnis der Spracherkennungsanalyse deshalb, weil derartige Systeme oftmals ebenfalls mit Sprachäquivalenten arbeiten. Somit können die Rechenressourcen, die beim Vergleich der Kontaktdatenbestandteile mit dem Ergebnis der Spracherkennungsanalyse benötigt werden, minimiert werden. Außerdem können Sprachäquivalente für verschiedene Sprachen vorgesehen sein, so dass eine Spracherkennung für Eingaben in unterschiedlichen Sprachen möglich wird.

Eine vorteilhafte Ausgestaltung des erfindungsgemäßen Verfahrens sieht vor, dass der Vergleich des Ergebnisses einer Spracherkennungsanalyse mit den Kontaktbestandteilen eine Wahrscheinlichkeitsanalyse umfasst. Ziel der Wahrscheinlichkeitsanalyse ist es, den Grad der Übereinstimmung zwischen dem Ergebnis der Spracherkennungsanalyse eines Eingabebestandteils und den Kontaktdatenbestandteilen zu bewerten. Dabei ist es besonders vorteilhaft, zumindest eine Wahrscheinlichkeitsschranke zu definieren. Eine obere Wahrscheinlichkeitsschranke kann derart definiert sein, dass Kontaktdatenbestandteile, die beim Vergleich mit dem Ergebnis einer Spracherkennungsanalyse, im Rahmen der Wahrscheinlichkeitsanalyse, einen Wahrscheinlichkeitswert bezüglich eines Eingabebestandteils aufweisen, der die obere Wahrscheinlichkeitsschranke überschreitet, dem entsprechenden Eingabebestandteil zugeordnet werden. Ein einem Eingabebestandteil zugeordneter Kontaktdatenbestandteil hat wiederum zur Folge, dass nur diejenigen Kontaktdatensätze bei der Auswahl zur Weiterverarbeitung in Frage kommen, die zumindest den betreffenden Kontaktdatenbestandteil enthalten.

In einer weiteren vorteilhaften Ausführungsform des erfindungsgemäßen Verfahrens wird bei einer akustischen Eingabe, die aus zwei oder mehren Eingabebestandteilen besteht, die Zuordnung von Kontaktdatenbestandteilen zu Eingabebestandteilen, unabhängig von der Reihenfolge der Eingabebestandteile, durchgeführt. Es findet eine Spracherkennungsanalyse der Eingabe statt, bei der grundsätzlich beliebig ist, ob die Unterteilung der Eingabe in Eingabebestandteile vor, nach oder während der Spracherkennungsanalyse stattfindet. Nachdem die Eingabe der Spracherkennungsanalyse unterzogen und in Eingabebestandteile unterteilt wurde, findet die Zuordnung von Kontaktbestandteilen zu dem Ergebnis der Spracherkennungsanalyse, jedoch für jeden Eingabebestandteil unabhängig vom Vergleich des Ergebnisses der Spracherkennungsanalyse mit den Kontaktdatenbestandteilen jeweils anderer Eingabebestandteile, statt. Es wird also für jeden einzelnen Eingabebestandteil ein Vergleich durchgeführt und daraufhin möglicherweise die Zuordnung eines Kontaktdatenbestandteils durchgeführt.

Auch dies dient der Flexibilisierung der Eingabe und dadurch gleichzeitig zur verbesserten Identifikation des gesuchten Kontaktdatensatzes. Der Benutzer kann somit alle Kontaktdatenbestandteile, die ihm zu dem gesuchten Kontaktdatensatz einfallen, als Eingabebestandteile eingeben, ohne dabei an etwaige Gliederungen oder Strukturen innerhalb eines Kontaktdatensatzes bzw. der Kontaktdatenbank gebunden zu sein. So kann beispielsweise die Eingabe von Eingabebestandteilen, die der Reihenfolge nach Nachname, Firma und Stadt eines Kontaktdatensatzes enthält, ebenso zu dessen Identifikation führen, wie die Eingabe von Eingabebestandteilen in der Reihenfolge Firma, Nachname, Stadt.

Zur Erläuterung einer weiteren, vorteilhaften Ausführungsform des erfindungsgemäßen Verfahrens soll zunächst angenommen werden, dass eine akustische Eingabe mit drei Eingabebestandteilen erfolgt ist. Weiter soll angenommen werden, dass beim Vergleich der Ergebnisse der Spracherkennungsanalyse mit den Kontaktdatenbestandteilen allen drei Eingabebestandteilen jeweils genau ein Kontaktdatenbestandteil zugeordnet wurde, wobei die Kontaktdatenbestandteile jedoch in unterschiedlichen Kontaktdatensätzen enthalten sind. Enthält dabei aber nur ein Kontaktdatensatz alle drei den Eingabebestandteilen zugeordnete Kontaktdatenbestandteile, so wird dieser Kontaktdatensatz zur Weiterverarbeitung ausgewählt. Mit anderen Worten bedeutet dies, dass die Kontaktdatenbestandteile "Andreas", "Müller", "Berlin" für sich genommen möglicherweise in mehr als einem Kontaktdatensatz einer ausführlichen Kontaktdatenbank enthalten sind, es jedoch nur einen Kontaktdatensatz innerhalb der Kontaktdatenbank gibt, der alle drei Kontaktdatenbestandteile aufweist. In diesem Fall ist es äußerst wahrscheinlich, dass der Benutzer die Auswahl dieses Kontaktdatensatzes mit seiner akustischen Eingabe beabsichtigt. Daher ist es vorteilhaft, wenn genau dieser Kontaktdatensatz, der alle den Eingabebestandteilen zugeordnete Kontaktdatenbestandteile aufweist, ausgewählt wird.

Eine alternative, jedoch nicht minder vorteilhafte Ausführungsform des erfindungsgemäßen Verfahrens besteht darin, dass beim Vergleich des Ergebnisses der Spracherkennungsanalyse mit den Kontaktdatenbestandteilen Kontaktdatensätze zur Weiterverarbeitung ausgewählt werden, bei denen zumindest ein Äquivalent eines Eingabebestandteils in den Kontaktdatenbestandteilen vermutet wird. Mit anderen Worten ausgedrückt bedeutet dies, dass die Auswahl zur Weiterverarbeitung aus Kontaktdatensätzen besteht, die zumindest einen Kontaktdatenbestandteil enthalten, welchem aufgrund des Vergleichs mit dem Ergebnis der Spracherkennungsanalyse zumindest ein Eingabebestandteil zugeordnet wurde.

Damit wird sichergestellt, dass auch bei einer nicht eindeutigen Identifizierung eines Kontaktdatensatzes eine Auswahl von Kontaktdatensätzen vorgenommen werden kann. Mit einer hohen Wahrscheinlichkeit ist der Kontaktdatensatz, den der Benutzer beabsichtigte einzugeben, in den ausgewählten Kontaktdatensätzen enthalten. Demnach kann durch eine einfache Interaktion, beispielsweise durch eine Auswahl oder Bestätigung von einem der zur Weiterverarbeitung ausgewählten Kontaktdatensätze, die korrekte, vom Benutzer beabsichtigte Eingabe erfolgen.

Alternativ dazu kann ebenfalls vorgesehen sein, dass ein Auswahlparameter definiert ist, der in die Auswahl der Kontaktdatensätze zur Weiterverarbeitung eingeht, wenn beim Vergleich des Ergebnisses der Spracherkennungsanalyse mit den Kontaktdatenbestandteilen eine Zuordnung von Kontaktdatenbestandteilen zu Eingabebestandteilen erfolgt ist, wobei jedoch nicht alle den Eingabebestandteilen zugeordnete Kontaktdatenbestandteile in einem Kontaktdatensatz enthalten sind. Der Auswahlparameter kann dabei beispielsweise berücksichtigen, welcher Eingabebestandteil mit der höchsten Wahrscheinlichkeit erkannt wurde oder welche Kontaktdatensätze in einer vergleichbaren Situation schon einmal ausgewählt wurden.

Außerdem ist es besonders vorteilhaft, wenn der zumindest eine zur Weiterverarbeitung ausgewählte Kontaktdatensatz mittels einer Ausgabeeinrichtung ausgegeben wird. Dabei bietet sich beispielsweise eine graphische Ausgabe auf einer Anzeigeeinrichtung oder eine akustische Ausgabe mittels einer akustischen Ausgabeeinrichtung an. In beiden Fällen wird das Ergebnis des erfindungsgemäßen Verfahrens dem Benutzer mitgeteilt, wodurch einerseits die Richtigkeit der Spracherkennung überprüft und andererseits eine Interaktion mit dem Benutzer vorbereitet beziehungsweise durchgeführt werden kann.

Nach einer weiteren Variante kann eine akustische Eingabe mittels des erfindungsgemäßen Verfahrens für unterschiedliche Eingabebebetriebsarten erfolgen. Als Eingabebetriebsart wird dabei eine Betriebsart des Navigationssystems angesehen, bei der eine Eingabe durch den Benutzer vorgenommen werden kann. Bei gattungsgemäßen Navigationssystemen ist die Zieleingabebetriebsart eine der geläufigsten Eingabebetriebsarten. Sie dient zur Eingabe eines Ziels für eine Routenberechnung. Neben dieser Eingabebetriebsart sind jedoch noch weitere Eingabebetriebsarten eines Navigationssystems, in Abhängigkeit von den Funktionalitäten des Navigationssystems, bekannt. Beispielsweise sind bei Navigationssystemen, die die Funktionalität einer Freisprecheinrichtung aufweisen, Eingabebetriebsarten zur Eingabe von Telefonnummern bekannt. Hier sollen die Eingabebetriebsarten untereinander und von der Zieleingabebetriebsart nach dem auf die Eingabe folgenden Arbeitsablauf unterschieden werden. Als auf die Eingabe folgender Arbeitsablauf können dabei alle sowohl unmittelbaren als auch mittelbaren Vorgänge zusammengefasst werden, die von einer Eingabe ausgelöst werden. Für die Zieleingabebetriebsart kann beispielsweise das Akzeptieren oder Ablehnen einer Eingabe ebenso als Teil des auf die Eingabe folgenden Arbeitsablaufes angesehen werden, wie das Initiieren einer Routenplanung.

Das erfindungsgemäße Verfahren wird der Spracheingabe in unterschiedlichen Eingabebetriebsarten besonders dann gerecht, wenn eine Auswahl von zumindest einem Kontaktdatenbestandteil eines zur Weiterverarbeitung ausgewählten Kontaktdatensatzes erfolgt, wobei die Auswahl des zumindest einen Kontaktdatenbestandteils von der Eingabebebetriebsart abhängt. Die zusätzliche Auswahl eines Kontaktdatenbestandteils eines zur Weiterverarbeitung ausgewählten Kontaktdatensatzes ermöglicht eine universelle Verwendung der Kontaktdatenbank für die verschiedensten Eingabebetriebsarten und eine optimale Anpassung des Ergebnisses der Spracheingabe in Abhängigkeit der Eingabebetriebsart. Weiter kann durch eine Selektierung von Kontaktdatenbestandteilen eines Kontaktdatensatzes, in Abhängigkeit von der Eingabebetriebsart, die Anzahl der nötigen Interaktionsschritte im auf die Eingabe folgenden Arbeitsablauf reduziert und damit der Benutzungskomfort von akustischen Eingaben deutlich erhöht werden.

Um den Rechenaufwand beim Vergleich des Ergebnisses der Spracherkennungsanalyse mit den Kontaktdatenbestandteilen zu verringern, kann vorgesehen werden, dass in einer Ausgestaltungsform des erfindungsgemäßen Verfahrens nur diejenigen Kontaktdatensätze für den Vergleich berücksichtigt werden, die zumindest einen, in Abhängigkeit von der Eingabebetriebsart, auszuwählenden Kontaktdatenbestandteil enthalten. Damit wird vermieden, dass einer akustischen Eingabe zwar einerseits ein Kontaktdatensatz zugeordnet werden kann, dieser jedoch für die aktivierte Eingabebetriebsart keinen auszuwählenden Kontaktdatenbestandteil aufweist. In einem derartigen Fall wären, angefangen von der Spracherkennungsanalyse über den Vergleich des Ergebnisses der Spracherkennungsanalyse mit den Kontaktdatenbestandteilen bis hin zum Auswählen eines Kontaktdatensatzes, ausschließlich unnötige Verfahrensschritte durchgeführt worden, die zwar nicht zu einer erfolgreichen Eingabe führen, das Navigationssystem und dessen Rechenressourcen jedoch in nicht unerheblichem Maße beanspruchen. Die vorgeschlagene Verfahrensvariante schließt diese unnötigen Belastungen des Systems aus.

Alternativ dazu kann vorgesehen sein, dass beim Vergleich des Ergebnisses der Spracherkennungsanalyse mit den Kontaktdatenbestandteilen alle Kontaktdatensätze berücksichtigt werden, wobei eine Kontaktdatenbestandteil-Eingabebetriebsart aktiviert wird, wenn zumindest ein Kontaktdatensatz zur Weiterverarbeitung ausgewählt wird, der kein, in Abhängigkeit von der Eingabebetriebsart, auszuwählenden Kontaktdatenbestandteil enthält. Die Kontaktdatenbestandteil-Eingabebetriebsart erlaubt also den in Abhängigkeit von der Eingabebetriebsart auszuwählenden Kontaktdatenbestandteil eines Kontaktdatensatzes zu ergänzen, wenn dieser in einem zur Weiterverarbeitung ausgewählten Kontaktdatensatz nicht enthalten ist. Dies kann beispielsweise manuell oder akustisch über eine entsprechende Eingabeeinrichtung erfolgen. Damit bleibt die Eingabe nicht ergebnislos, wenn ein eingegebener und korrekt identifizierter Kontaktdatensatz einen auszuwählenden Kontaktdatenbestandteil nicht aufweist. Weiter wird dadurch der Informationsgehalt der Kontaktdatenbank stetig erweitert, wodurch wiederum der Betrieb eines Navigationssystems mit dem vorgeschlagenen Verfahren vorteilhaft beeinflusst wird.

Nach einer weiteren Variante kann vorgesehen sein, dass in Abhängigkeit von der Eingabebetriebsart ausgewählte Kontaktdatenbestandteile von zur Weiterverarbeitung ausgewählten Kontaktdatensätzen mittels einer Ausgabeeinrichtung ausgegeben werden. Auch hier kann eine akustische und/oder graphische Ausgabe erfolgen. Die entsprechende Ausgabe kann gegenüber einer Ausgabe des gesamten zur Weiterverarbeitung ausgewählten Kontaktdatensatzes für den Benutzer überaus vorteilhaft sein, da die Informationen in komprimierter Form ausgegeben werden, wodurch eine bessere Übersichtlichkeit der Ausgabe gewährleistet wird.

Weiter ist es besonders vorteilhaft für das erfindungsgemäße Verfahren, wenn ausgewählte Kontaktdatenbestandteile mit oder ohne Bestätigung durch den Benutzer als Eingabe weiterverarbeitet werden. Dies bietet sich insbesondere dann an, wenn ein Kontaktdatensatz ausgewählt wurde und dieser Kontaktdatensatz bezüglich der auszuwählenden Kontaktdatenbestandteile in Abhängigkeit der Eingabebetriebsart keine Mehrdeutigkeiten, also nur einen entsprechenden Kontaktdatenbestandteil bzw. nur einen eindeutigen Satz aus mehreren auszuwählenden Kontaktdatenbestandteilen, aufweist. Die Weiterverarbeitung als Eingabe ist dabei besonders bei einer Zielpunkteingabe für einen Routenberechnungsprozess oder bei einer Telefonnummerneingabe für das Tätigen eines Telefonanrufs vorteilhaft. Damit können, je nachdem ob eine Bestätigung durch den Benutzer vorgesehen ist oder nicht, akustische Eingabevorgänge mit einer Bestätigungsinteraktion beziehungsweise ohne weitere Interaktionen mit dem Navigationssystem vorgenommen werden, wobei die Eingabe alle Kontaktdatenbestandteile beinhalten kann, die im betreffenden Kontaktdatensatz derart gespeichert sind, dass ein Vergleich mit dem Ergebnis einer Spracherkennung erfolgen kann. Dadurch wird die Leistungsfähigkeit einer akustischen Eingabe deutlich erhöht.

Im Folgenden wird die Erfindung anhand von schematischen Zeichnungen, welche lediglich Ausführungsbeispiele zeigen, näher erläutert.

Es zeigen:
- Fig. 1: schematisierte Darstellung einer Anzeigeeinrichtung eines Navigationssystems vor der Aktivierung einer Eingabebetriebs- art, sowie die dazugehörigen Ausgaben des Navigationssys- tems;
- Fig. 2: schematisierte Darstellung einer Anzeigeeinrichtung eines Navigationssystems während der akustischen Eingabe, sowie die entsprechenden akustischen Ausgaben des Navigationssys- tems;
- Fig. 3: schematisierte Darstellung einer Anzeigeeinrichtung eines Navigationssystems nach der Durchführung des erfindungsge- mäßen Verfahrens, sowie die entsprechenden akustischen Aus- gaben des Navigationssystems;
- Fig. 4: schematisierter Ausschnitt einer Kontaktdatenbank.

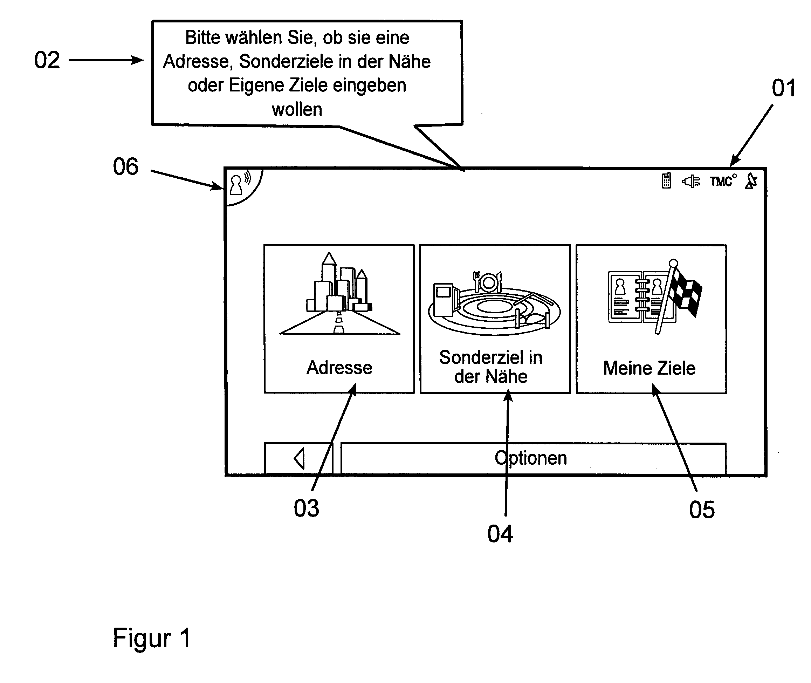

Fig. 1 zeigt eine schematisierte Anzeigeeinrichtung 01 eines Navigationssystems bei der Auswahl einer Eingabebetriebsart, sowie die zur Auswahl der Eingabebetriebsart vom Navigationssystem ausgegebenen akustischen Signale in Form des Ausgabekastens 02. Die drei Eingabebetriebsarten sind durch die Anzeigeninhalte "Adresse" 03, "Sonderziele in der Nähe" 04 und "Meine Ziele" 05 als Teil der Darstellung der Anzeigeeinrichtung dargestellt. Der Spracherkennungsanzeigeinhalt 06 weist den Benutzer darauf hin, dass eine akustische bzw. sprachgesteuerte Eingabe möglich ist. Im vorliegenden Beispiel wählt der Benutzer durch die akustische Eingabe "Meine Ziele" die Eingabebetriebsart, die mit dem Anzeigeinhalt "Meine Ziele" 05 verknüpft ist. Diese Eingabebetriebsart sieht eine Eingabe eines Zielpunktes für eine Routenberechnung vor, wobei die Ziele aus den in der Kontaktdatenbank gespeicherten Kontaktdatensätzen ausgewählt werden.

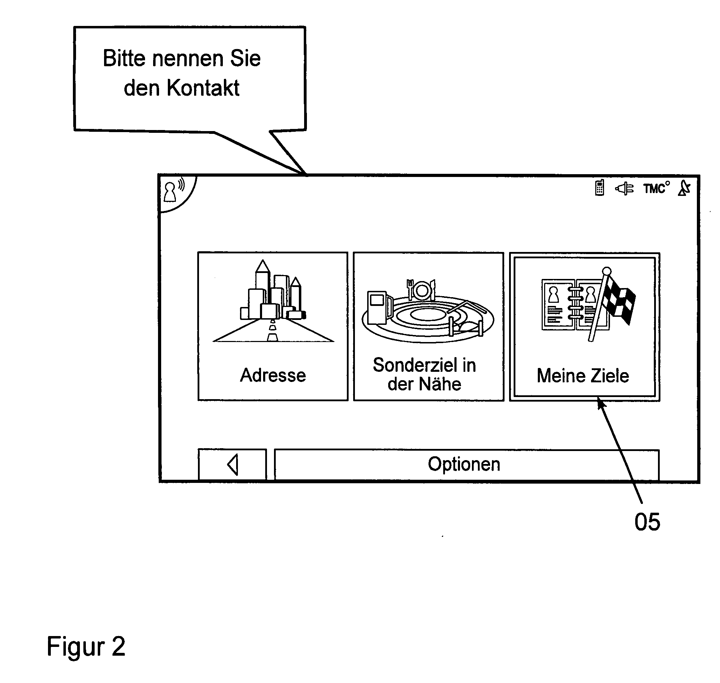

Fig. 2 zeigt eine schematisierte Anzeigeeinrichtung 01 eines Navigationssystems nach der Aktivierung der Eingabebetriebsart "Meine Ziele". Dies wird durch die graphische Hervorhebung des Anzeigeinhalts "Meine Ziele" 05 dargestellt. Der Ausgabekasten 07 enthält die akustischen Ausgaben des Navigationssystems, in denen der Benutzer aufgefordert wird, eine Eingabe vorzunehmen. Im vorliegenden Fall möchte der Benutzer ein Ziel eingeben, das er gedanklich mit einem Namen in Verbindung bringt. Daher besteht seine Eingabe aus dem Namen "Schmidt" als Eingabebestandteil. Der Vergleich des Ergebnisses der Spracherkennungsanalyse mit den Kontaktdatenbestandteilen der Kontaktdatenbank führt im vorliegenden Beispiel dazu, dass die Kontaktdatenbestandteile "Schmidt", "Schmitt" und "Schmied" als die am wahrscheinlichsten der Eingabe entsprechenden Kontaktdatenbestandteile dem Eingabebestandteil zugeordnet werden. Daraufhin werden alle Kontaktdatensätze, die einen dieser Kontaktdatenbestandteile enthalten, ausgewählt und auf der Anzeigeeinrichtung 01 ausgegeben.

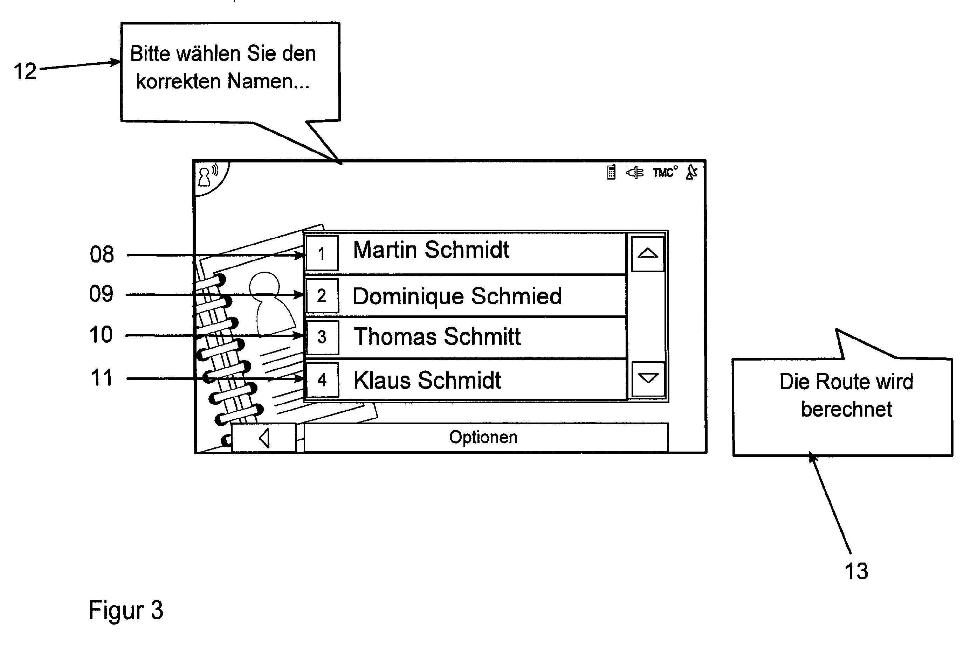

Dementsprechend sind auf der Anzeigeeinrichtung 01 der Fig. 3 die Namensbestandteile der ausgewählten Kontaktdatensätze zusammen mit einer Nummerierung in den Anzeigeinhalten 08 bis 11 ausgegeben. Diese repräsentieren die zur Weiterverarbeitung ausgewählten Kontaktdatensätze. Eine alternative Darstellung könnte darin bestehen, dass andere Kontaktdatenbestandteile der ausgewählten Kontaktdatensätze zusätzlich oder anstatt der Namensbestandteile in den Anzeigeinhalten 08 bis 11 enthalten sind. In einem weiteren Schritt hat der Benutzer im vorliegenden Beispiel die Möglichkeit, einen der ausgegebenen Kontaktdatensätze für eine Routenberechnung auszuwählen, wozu er durch die akustische Ausgabe des Navigationssystems, die in dem Ausgabekasten 12 dargestellt ist, aufgefordert wird. Durch die akustische Eingabe "1" oder eine manuelle Bestätigung des Anzeigeinhalts 08 wählt der Benutzer im Beispiel den Kontakt "Martin Schmidt" aus, woraufhin die Kontaktdatenbestandteile, die die Adresse des Kontaktdatensatzes beschreiben, als Zielpunkt für einen Routenberechnungsprozess übernommen werden. Die Initialisierung des Routenberechnungsprozesses wird dem Benutzer über die akustischen Ausgaben des Navigationssystems in Form des Ausgabekastens 13 mitgeteilt.

Alternativ zu der Eingabe "Schmidt" in Figur 2 wäre auch eine Eingabe möglich gewesen, die einen weiteren Eingabebestandteil enthält, den der Benutzer gedanklich mit dem gewünschten Kontakt verbindet. Der Eingabe "Martin Schmidt" soll im vorliegenden Beispiel lediglich der Kontaktdatenbestandteil "Martin" für den ersten Eingabebestandteil und, wie im vorangegangenen Beispiel, die Kontaktdatenbestandteile "Schmidt", "Schnitt" und "Schmied" für den zweiten Eingabebestandteil zugeordnet werden. Eine derartige Zuordnung führt dazu, dass nur der in Anzeigeinhalt 08 repräsentierte Kontaktdatensatz zur Weiterverarbeitung ausgewählt wird. Diese Auswahl erfolgt, da in der Kontaktdatenbank 14 zwar auch Kontaktdatensätze mit den Kontaktdatenbestandteilen beziehungsweise Namensbestandteilen "Schmitt" und "Schmied" enthalten sind, jedoch nur bei dem Kontaktdatensatz des Anzeigeinhalts 08 alle Eingabebestandteile einem Kontaktdatenbestandteil des Kontaktdatensatz zugeordnet werden können. Es ist jedoch hervorzuheben, dass die akustische Eingabe nicht auf Namensbestandteile beschränkt ist. Es können vielmehr alle Kontaktdatenbestandteile eines Kontaktdatensatzes als Eingabebestandteil verwendet werden, die derart in der Kontaktdatenbank gespeichert sind, dass ein Vergleich mit dem Ergebnis einer Spracherkennungsanalyse erfolgen kann.

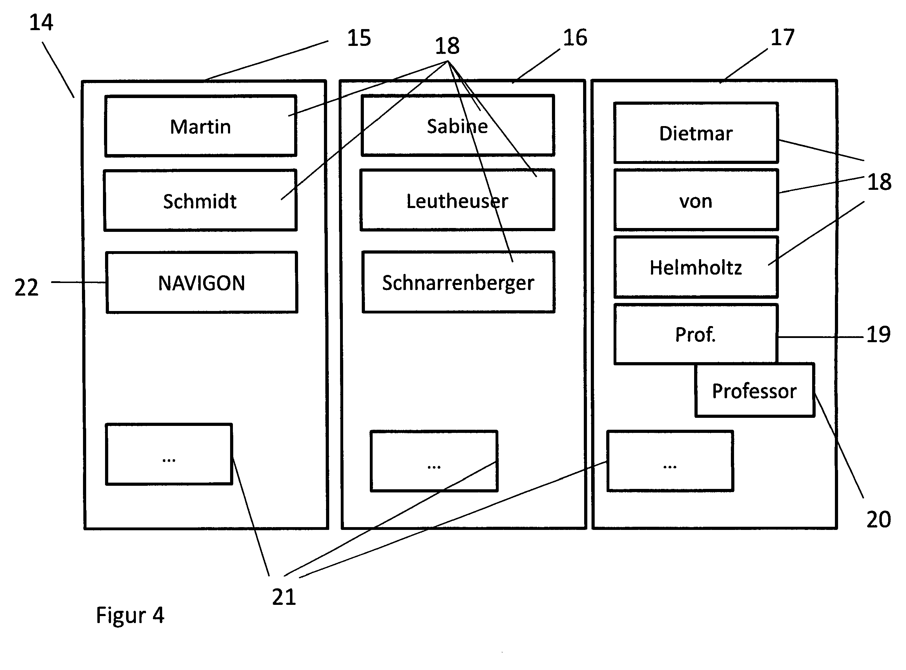

Fig. 4 zeigt einen schematisierten Ausschnitt einer Kontaktdatenbank 14. Die Kontaktdatenbank 14 enthält eine Vielzahl von Kontaktdatensätzen 15, 16 und 17. Jeder der dargestellten Kontaktdatensätze 15, 16, 17 enthält zumindest einen Namensbestandteil 18. Zu dem Kontaktdatenbestandteil 19, der eine in der Schriftform übliche Abkürzung enthält, ist als Synonym der Abkürzung die ausführliche Schreibweise als Kontaktdatenbestandteil 20 ebenfalls im Kontaktdatensatz 17 gespeichert. Der Kontaktdatensatz 15 enthält einen Kontaktdatenbestandteil 22, der eine Firma bzw. ein Unternehmen beschreibt. Des Weiteren können die Kontaktdatensätze 15, 16 und 17 eine Vielzahl weiterer Kontaktdatenbestandteile 21 enthalten. Die Kontaktdatenbestandteile 21 können dabei jeweils beispielsweise Adressen und Telefonnummern beschreiben.

## Patentansprüche

1. Verfahren zum Betrieb eines Navigationssystems umfassend zumindest eine Aufnahmeeinrichtung, ein Spracherkennungsmodul, zumindest eine Ausgabeeinrichtung und eine Kontaktdatenbank (14), in der Kontaktdatensätze (15, 16, 17) gespeichert sind, die während der Laufzeit des Navigationssystems erstellt werden, und die jeweils zumindest einen Kontaktdatenbestandteil (21), insbesondere zumindest einen Namensbestandteil (18), umfassen, wobei zumindest ein Teil der Kontaktdatenbestandteile derart gespeichert ist, dass ein Vergleich mit dem Ergebnis einer Spracherkennungsanalyse erfolgen kann,
mit den folgenden Verfahrensschritten:
a) Aufnahme einer akustischen Eingabe bestehend aus zumindest einem Eingabebestandteil mittels der Aufnahmeeinrichtung;
b) Analyse der akustischen Eingabe mittels Spracherkennungsmodul;
c) Vergleich des Ergebnisses der Spracherkennungsanalyse mit zumindest einem Teil der Kontaktdatenbestandteile, wobei der Vergleich zu einer Zuordnung eines Eingabebestandteils zu zumindest einem Kontaktdatenbestandteil führen kann;
d) Auswahl zumindest eines Kontaktdatensatzes (15, 16, 17) zur Weiterverarbeitung, wobei ein ausgewählter Kontaktdatensatz (15, 16, 17) zumindest einen Kontaktdatenbestandteil umfasst, der einem Eingabebestandteil zugeordnet ist.

2. Verfahren nach Anspruch 1,
**dadurch gekennzeichnet,**
**dass** Kontaktdatenbestandteile manuell mittels einer Eingabeeinrichtung des Navigationssystems, insbesondere an einem Touchscreen, alphanumerisch eingegeben werden können.

3. Verfahren nach einem der Ansprüche 1 oder 2,
**dadurch gekennzeichnet,**
**dass** Kontaktdatenbestandteile elektronisch an das Navigationssystem übertragen werden, wobei die Übertragung von einer Vorrichtung, insbesondere einem Mobiltelefon, einem Computer und/oder einem Personal Digital Assistant (PDA), erfolgt, welches zum Empfang und/oder zum Speichern und/oder zum Senden von Kontaktdatenbestandteilen eingerichtet ist.

4. Verfahren nach einem der Ansprüche 1 bis 3,
**dadurch gekennzeichnet,**
**dass** der Vergleich des Ergebnisses der Spracherkennungsanalyse eines Eingabebestandteils mit Kontaktdatenbestandteilen Synonyme der Kontaktdatenbestandteile berücksichtigt, wobei die Synonyme der Kontaktdatenbestandteile im Kontaktdatensatz (15, 16, 17) als Kontaktdatenbestandteile gespeichert sind.

5. Verfahren nach Anspruch 4,
**dadurch gekennzeichnet,**
**dass** zu Kontaktdatenbestandteilen (19), die eine Abkürzung eines Begriffs darstellen, die jeweiligen Begriffe in ausführlicher Schreibweise als Synonyme (20) im Kontaktdatensatz (17) des abgekürzten Kontaktdatenbestandteils (19) gespeichert sind.

6. Verfahren nach einem der Ansprüche 1 bis 5,
**dadurch gekennzeichnet,**
**dass** der Vergleich des Ergebnisses der Spracherkennungsanalyse von Eingabebestandteilen mit Kontaktdatenbestandteilen anhand von Sprachäquivalenten erfolgt, wobei Sprachäquivalente, insbesondere Phoneme der Kontaktdatenbestandteile, im Kontaktdatensatz (15, 16, 17) gespeichert sind.

7. Verfahren nach einem der Ansprüche 1 bis 6,
**dadurch gekennzeichnet,**
**dass** der Vergleich des Ergebnisses der Spracherkennungsanalyse von Eingabebestandteilen mit Kontaktdatenbestandteilen eine Wahrscheinlichkeitsanalyse umfasst, wobei der Vergleich zu einer Zuordnung eines Eingabebestandteils zu einem Kontaktdatenbestandteil führt, wenn das Ergebnis der Wahrscheinlichkeitsanalyse eine obere Wahrscheinlichkeitsschranke überschreitet.

8. Verfahren nach einem der Ansprüche 1 bis 7,
**dadurch gekennzeichnet,**
**dass** die Zuordnung von Kontaktdatenbestandteilen zu Eingabebestandteilen bei Eingaben, bestehend aus zumindest zwei Eingabebestandteilen, unabhängig von der Reihenfolge der Eingabebestandteile erfolgt.

9. Verfahren nach einem der Ansprüche 1 bis 8,
**dadurch gekennzeichnet,**
**dass**, wenn beim Vergleich des Ergebnisses der Spracherkennungsanalyse mit den Kontaktdatenbestandteilen alle Eingabebestandteile den Kontaktdatenbestandteilen eines Kontaktdatensatzes (15, 16, 17) zugeordnet wurden, dieser Kontaktdatensatz zur Weiterverarbeitung ausgewählt wird.

10. Verfahren nach einem der Ansprüche 1 bis 8,
**dadurch gekennzeichnet,**
**dass** Kontaktdatensätze (15, 16, 17) ausgewählt werden, für die der Vergleich des Ergebnisses der Spracherkennungsanalyse mit den Kontaktdatenbestandteilen zu einer Zuordnung von zumindest einem Eingabebestandteil zu einem Kontaktdatenbestandteil des Kontaktdatensatzes (15, 16, 17) geführt hat.

11. Verfahren nach einem der Ansprüche 1 bis 10,
**dadurch gekennzeichnet,**
**dass** zur Weiterverarbeitung ausgewählte Kontaktdatensätze (15, 16, 17) mittels einer Ausgabeeinrichtung ausgegeben werden.

12. Verfahren nach einem der Ansprüche 1 bis 11,
**dadurch gekennzeichnet,**
**dass** das Navigationssystem, außer in einer Zieleingabebetriebsart, zumindest in einer zweiten Eingabebetriebsart betrieben werden kann, wobei sich die zumindest zweite und weitere Eingabebetriebsarten jeweils durch den auf die Eingabe folgenden Arbeitsablauf voneinander und von der Zieleingabebetriebsart unterscheiden.

13. Verfahren nach Anspruch 12,
**dadurch gekennzeichnet,**
**dass** eine Auswahl von zumindest einem Kontaktdatenbestandteil eines zur Weiterverarbeitung ausgewählten Kontaktdatensatzes (15, 16, 17) erfolgt, wobei die Auswahl des zumindest einen Kontaktdatenbestandteils von der Eingabebetriebsart abhängt.

14. Verfahren nach Anspruch 12 oder 13,
**dadurch gekennzeichnet,**
**dass** der Vergleich des Ergebnisses der Spracherkennungsanalyse mit zumindest einem Teil der Kontaktdatenbestandteile für die Kontaktdatensätze (15, 16, 17) durchgeführt wird, die zumindest einen, in Abhängigkeit von der Eingabebetriebsart, auszuwählenden Kontaktdatenbestandteil umfassen.

15. Verfahren nach Anspruch 12 oder 13,
**dadurch gekennzeichnet,**
**dass** der Vergleich des Ergebnisses der Spracherkennungsanalyse mit den Kontaktdatenbestandteilen für alle Kontaktdatensätze (15, 16, 17) durchgeführt wird, wobei eine Kontaktdatenbestandteil-Eingabebetriebsart aktiviert wird, wenn zumindest ein zur Weiterverarbeitung ausgewählter Kontaktdatensatz (15, 16, 17) keinen in Abhängigkeit der Eingabebetriebsart auszuwählenden Kontaktdatenbestandteil umfasst.

16. Verfahren nach einem der Ansprüche 12 bis 14,
**dadurch gekennzeichnet,**
**dass** ein in Abhängigkeit von der Eingabebetriebsart ausgewählter Kontaktdatenbestandteil eines ausgewählten Kontaktdatensatzes (15, 16, 17) auf einer Ausgabeeinrichtung ausgegeben wird.

17. Verfahren nach einem der Ansprüche 12 bis 14,
**dadurch gekennzeichnet,**
**dass** ein in Abhängigkeit von der Eingabebetriebsart ausgewählter Kontaktdatenbestandteil eines ausgewählten Kontaktdatensatzes (15, 16, 17) mit oder ohne vorherige Bestätigungsinteraktion des Benutzers als Eingabe weiterverarbeitet wird.
